# EUROPÄISCHE PATENTSCHRIFT

(11) **EP 1 039 193 B1**
(45) Veröffentlichungstag und Bekanntmachung des Hinweises auf die Patenterteilung: **29.11.2006**
(21) Anmeldenummer: 00890058.1
(22) Anmeldetag: 29.02.2000
(51) Int. Cl.: F16K 35/02

(54) **Vorrichtung zum Verriegeln eines Rohrleitungsventils**
Locking device for a pipeline valve
Dispositif de verrouillage d'une soupape de conduit

(30) Priorität: 22.03.1999 AT 19399 U
(43) Veröffentlichungstag der Anmeldung: 27.09.2000
(73) Patentinhaber: Praher, Ludwig, 4311 Schwertberg (AT)
(72) Erfinder: Praher, Ludwig, 4311 Schwertberg (AT)
(74) Vertreter: Hübscher, Helmut

(56) Entgegenhaltungen:
- GB-A- 178 274
- US-A- 2 221 101
- US-A- 5 285 997
- US-A- 5 860 446

## Beschreibung

Die Erfindung bezieht sich auf eine Vorrichtung zum Verriegeln eines Rohrleitungsventils mit einem auf eine Betätigungswelle des Rohrleitungsventils aufsetzbaren Betätigungsglied, dem ein eine Durchgangsbohrung durchsetzender, in wenigstens eine Rastöffnung im Ventilgehäuse einführbarer Riegelbolzen zugeordnet ist.

Aufgrund von beispielsweise durch hohe Strömungsgeschwindigkeiten verursachten Schwingungen einer Rohrleitung oder äußeren am Betätigungsglied angreifenden Kräften kann es zu einer unbeabsichtigten Verstellung der in die Rohrleitung eingeschalteten Rohrleitungsventile kommen. Um diese unbeabsichtigte Verstellung von Rohrleitungsventilen, beispielsweise von Umschalt- oder Absperrventilen, zu verhindern, wird das drehfest mit der Betätigungswelle des Rohrleitungsventiles verbundene Betätigungsglied, z. B. ein Handrad oder ein Handgriff, gegenüber dem Ventilgehäuse in der vorgesehenen Betriebsstellung des Rohrleitungsventiles mit Hilfe eines Riegelbolzens verriegelt, der in einer Durchgangsbohrung des Betätigungsgliedes geführt ist und in eine Rastöffnung im Ventilgehäuse eingreift, so daß in dieser Verriegelungsstellung eine Drehung des Betätigungsgliedes gegenüber dem Ventilgehäuse wirksam verhindert wird. Diese Riegelungsbolzen bilden selbst für den Fall, daß sie in die Rastöffnung im Ventilgehäuse eingeschraubt werden, zumindest in der Entriegelungsstellung lose Teile, die leicht verloren werden. Außerdem ist anhand der Lage des Riegelbolzens gegenüber dem Betätigungsglied nicht ohne weiteres die Ver- oder Entriegelung des Betätigungsgliedes erkennbar.

Der Erfindung liegt somit die Aufgabe zugrunde, eine Vorrichtung zum Verriegeln eines Rohrleitungsventils der eingangs geschilderten Art so auszugestalten, daß vorteilhafte Voraussetzungen für eine einfache Betätigung der Verriegelungsvorrichtung mit einer eindeutigen Anzeige des gewählten Verriegelungszustandes vorliegen. Außerdem sollen verlierbare Teile vermieden werden.

Die Erfindung löst die gestellte Aufgabe dadurch, daß der mit einem radial abstehenden Anschlagnocken versehene Riegelbolzen über einen Betätigungskopf in der Durchgangsbohrung zwischen zwei die Ver- und Entriegelung bedingenden Endstellungen verlagerbar ist, die durch zwei mit dem Anschlagnocken zusammenwirkende, in Achs- und Umfangsrichtung gegeneinander versetzte Anschläge festgelegt sind, und daß der Riegelbolzen durch eine Feder im Anschlagsinn des Anschlagnockens axial beaufschlagbar ist.

Da zufolge dieser Maßnahmen der axiale Eingriff des Riegelbolzens in die Rastöffnung über den Anschlagnocken gesteuert wird, der mit zwei sowohl in Achs- als auch in Umfangsrichtung gegeneinander versetzten Anschlägen zusammenwirkt, muß der Riegelbolzen zur Ver- und Entriegelung nicht nur axial verstellt, sondern auch zusätzlich verdreht werden, so daß anhand der jeweiligen Drehstellung des Betätigungskopfes des Riegelbolzens der Verriegelungszustand eindeutig abgelesen werden kann, insbesondere wenn der Betätigungskopf zu diesem Zweck eine entsprechende Kennung aufweist. Die den Riegelbolzen im Anschlagsinn des Anschlagnockens axial beaufschlagende Feder stellt die axiale Anschlaglage des Riegelbolzens und damit die den Endstellungen des Riegelbolzens zugehörigen Verriegelungsstellungen sicher. Die dem Betätigungsglied zugehörigen Anschläge, gegen die der Anschlagnocken des Riegelbolzens durch die Feder axial angedrückt wird, bieten außerdem eine einfache Möglichkeit, den Riegelbolzen unverlierbar in der Durchgangsbohrung festzuhalten.

Besonders einfache Konstruktionsverhältnisse ergeben sich in diesem Zusammenhang dadurch, daß die gegeneinander versetzten Anschläge aus einer abgestuften Ausnehmung am verriegelungsseitigen Ende der Durchgangsbohrung bestehen, daß die Durchgangsbohrung außerhalb des Umfangbereiches der abgestuften Ausnehmung für die Anschläge eine axial durchgehende Längsnut zum Einführen des Anschlagnockens des Riegelbolzens aufweist und daß die axiale Eingriffstiefe der Rastöffnung im Ventilgehäuse kleiner als die für ein Ausschieben des Anschlagnockens aus der Durchgangsbohrung vorgesehene Verschiebelänge des Riegelbolzens ist, der die zwischen dem Betätigungskopf und dem Betätigungsglied abgestützte Feder durchsetzt. Der in diesem Fall einstückig ausbildbare Riegelbolzen kann von dem der Verriegelungsseite gegenüberliegenden Ende der Durchgangsbohrung her in diese eingeführt werden, und zwar vor dem Aufsetzen des Betätigungsgliedes auf die Betätigungswelle, weil nach dem Aufsetzen des Betätigungsgliedes auf die Betätigungswelle der Anschlagnocken des Riegelbolzens wegen des Anschlagens des Riegelbolzens am Ventilgehäuse nicht mehr aus der Längsnut ausgeschoben werden kann, um außerhalb der Durchgangsbohrung zu der abgestuften Ausnehmung für die Anschläge verschwenkt zu werden. Zum Einsetzen des Riegelbolzens in die Durchgangsbohrung des Betätigungsgliedes ist folglich zunächst die Feder auf den Riegelbolzen aufzuschieben, bevor der Riegelbolzen mit dem in die Längsnut eingreifenden Anschlagnocken durch die Durchgangsbohrung durchgesteckt werden kann, bis der Anschlagnocken aus der Durchgangsbohrung axial vorsteht und gegen die abgestufte Ausnehmung verschwenkt wird, in die der Anschlagnocken über die den Riegelbolzen belastende Feder eingezogen wird. Die Feder wird ja beim Einführen des Riegelbolzens in die Durchgangsbohrung einer entsprechenden Vorspannung unterworfen. Damit ist der federbelastete Riegelbolzen unverlierbar dem Betätigungsglied zugeordnet, das nach dem Aufsetzen auf die Betätigungswelle des Rohrleitungsventils über den Riegelbolzen verriegelt werden kann, wenn das Verriegelungsende des Riegelbolzens in die Rastöffnung des Ventilgehäuses eingreift. Bei aufgesetztem Betätigungsglied kann der Riegelbolzen nicht mehr aus der Durchgangsbohrung entfernt werden, weil die Eingriffstiefe der Rastöffnung im Ventilgehäuse kleiner als die für ein Ausschieben des Anschlagnockens aus der Durchgangsbohrung erforderliche Verschiebelänge des Riegelbolzens ist, so daß der Anschlagnokken nicht mehr zur Längsnut verschwenkt werden kann.

Der zwischen zwei die Ver- und Entriegelung bedingenden Endstellungen in der Durchgangsbohrung anschlagbegrenzt verdrehbare Riegelbolzen erlaubt nicht nur eine einfache Erkennung der jeweiligen Verriegelungsstellung, sondern bietet auch die einfache Möglichkeit, die Verriegelungsstellung zusätzlich zu sichern. Zu diesem Zweck kann der Betätigungskopf des Riegelbolzens einen radial abstehenden, mit einem Anschlag des Betätigungsgliedes zusammenwirkenden Steg aufweisen, der zu einer solchen Sicherung mit dem Anschlag des Betätigungsgliedes verbunden werden kann. Der radial abstehende Steg dient außerdem vorteilhaft als Kennung der jeweiligen Drehstellung des Riegelbolzens und erleichtert darüber hinaus die Handhabung des Betätigungskopfes.

In der Zeichnung ist der Erfindungsgegenstand beispielsweise dargestellt. Es zeigen
- Fig. 1: ein Rohrleitungsventil mit einer erfindungsgemäßen Verriegelungsvorrichtung in einer vereinfachten, zum Teil aufgerissenen Seitenansicht,
- Fig. 2: das Betätigungsglied dieses Rohrleitungsventils ausschnittsweise in einem Schnitt durch die Durchgangsbohrung in einem größeren Maßstab,
- Fig. 3: eine Draufsicht auf die Durchgangsbohrung gemäß der Fig. 2,
- Fig. 4: eine Untersicht des Betätigungsgliedes im Bereich der Durchgangsbohrung und
- Fig. 5: die Verriegelungsvorrichtung in einer der Fig. 1 entsprechenden Darstellung, jedoch mit entriegeltem Riegelbolzen in einem größeren Maßstab.

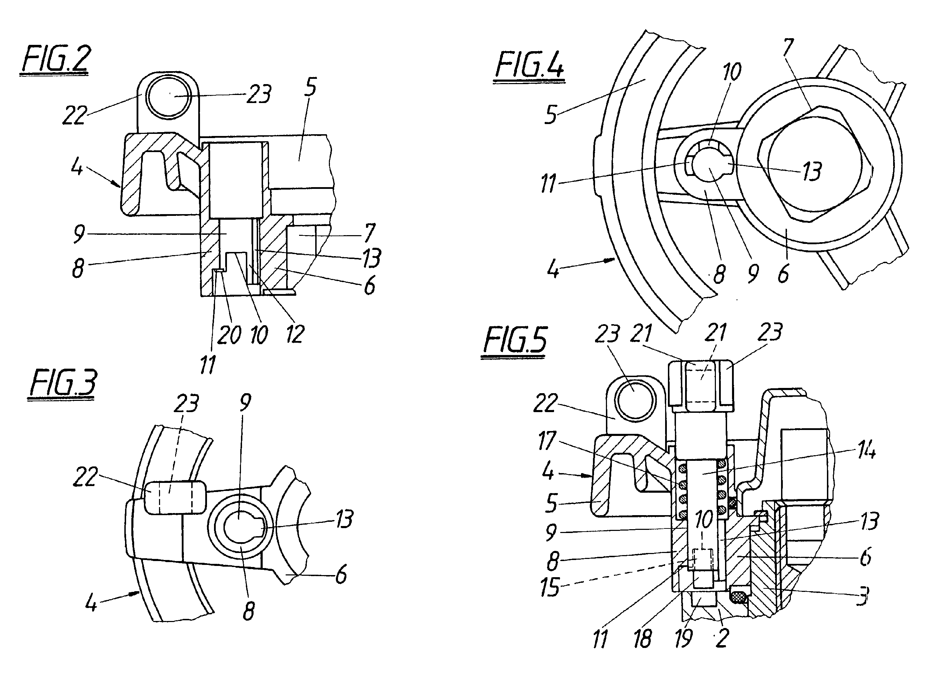

Das Rohrleitungsventil 1 gemäß dem dargestellten Ausführungsbeispiel weist eine in einem Ventilgehäuse 2 gelagerte Betätigungswelle 3 auf, auf die ein Betätigungsglied 4, beispielsweise ein Handrad 5, axial formschlüssig aufgesetzt ist. Zu diesem Zweck bildet die Betätigungswelle 3 einen Vierkantansatz, für den die Nabe 6 des Handrades 5 eine entsprechende vierkantige Aufnahme 7 bildet, wie dies insbesondere der Fig. 4 zu entnehmen ist. In einem Ansatz 8 der Nabe 6 ist eine zur Betätigungswelle 3 parallele Durchgangsbohrung 9 vorgesehen, die auf der dem Ventilgehäuse 2 zugekehrten Stirnseite zwei gegeneinander axial versetzte Anschläge 10 und 11 aufweist (Fig. 2), die zusätzlich um 90° in Umfangsrichtung versetzt angeordnet sind, wie dies insbesondere der Fig. 4 entnommen werden kann. Diese Anschläge 10 und 11 werden durch eine abgestufte, stirnseitige Ausnehmung 12 der Durchgangsbohrung 9 gebildet, was der Fig. 2 am deutlichsten entnommen werden kann. Außerhalb des Umfangsbereiches der abgestuften Ausnehmung 12 ist die Durchgangsbohrung 9 mit einer durchgehenden Längsnut 13 versehen. Diese Längsnut 13 der Durchgangsbohrung 9 erlaubt das Einsetzen eines Riegelbolzens 14, der mit einem radial abstehenden, durch die Längsnut 13 einführbaren Anschlagnocken 15 versehen ist. Da dieser Anschlagnocken 15 mit den Anschlägen 10 und 11 der stufenartigen Ausnehmung 12 zusammenwirkt, muß beim Einsetzen des Riegelbolzens 14 dieser soweit durch die Durchgangsbohrung 9 gesteckt werden, bis er über die Längsnut 13 vorsteht und durch ein Verdrehen des Riegelbolzens 14 in den Bereich der abgestuften Ausnehmung 12 verschwenkt werden kann.

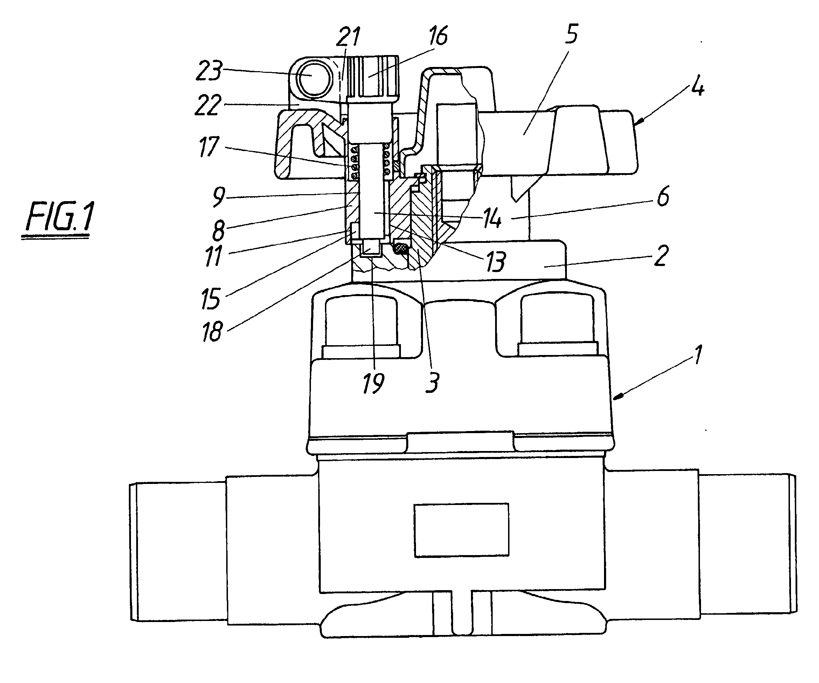

Wie den Fig. 1 und 5 zu entnehmen ist, trägt der Riegelbolzen 14 einen Betätigungskopf 16, zwischen dem und dem Ansatz 8 der Nabe 6 sich eine Feder 17 abstützt. Diese als Schraubenfeder ausgebildete, vom Riegelbolzen 14 durchsetzte Feder 17 muß daher vor dem Einsetzen des Riegelbolzens 14 in die Durchgangsbohrung 9 auf den Riegelbolzen 14 aufgebracht werden. Nach dem Verschwenken des durch die Längsnut 13 durchgeschobenen Anschlagnockens 15 in den Bereich der abgestuften Ausnehmung 12 bewirkt die beim Einsetzen des Riegelbolzens 14 in die Durchgangsbohrung 9 vorgespannte Feder 17 ein Zurückziehen des Riegelbolzens 14, bis der Anschlagnocken 15 an einem der Anschläge 10 oder 11 anschlägt. Damit ist der Riegelbolzen 14 gegenüber einer unbeabsichtigten Abnahme vom Handrad 5 gesichert, weil zum Ausziehen des Riegelbolzens 14 aus der Durchgangsbohrung 9 der Riegelbolzen 14 entgegen der Kraft der Feder 17 in die Durchgangsbohrung 9 eingeschoben werden muß, bis der aus der Durchgangsbohrung 9 austretende Anschlagnocken 15 wieder zurück zur Längsnut 13 verschwenkt werden kann.

In der in der Fig. 5 gezeichneten Entriegelungsstellung des Riegelbolzens 14 liegt der Anschlagnocken 15 am Anschlag 10 an, wobei das Verriegelungsende 18 des Riegelbolzens 14 innerhalb der Durchgangsbohrung 9 zu liegen kommt, so daß dieses Verriegelungsende 18 nicht gegen das Ventilgehäuse 2 vorragt. Das Handrad 5 kann folglich in herkömmlicher Weise auf die Betätigungswelle 3 axial aufgesteckt und gegen ein Abziehen gesichert werden. Wird nunmehr das Rohrleitungsventil 1 über das Handrad 5 in eine zu sichernde Lage verstellt, in der das Ventilgehäuse 2 eine zur Durchgangsbohrung 9 koaxiale Rastöffnung 19 für das Verriegelungsende 18 des Riegelbolzens 14 aufweist, so kann die Verriegelung in einfacher Weise durch ein Einschieben des Verriegelungsbolzens 14 in die Durchgangsbohrung 9 entgegen der Kraft der Feder 17 und ein anschließendes Verdrehen um 90° durchgeführt werden, weil in dieser Verriegelungsstellung des Riegelbolzens 14 der Anschlagnocken 15 mit dem Anschlag 11 zusammenwirkt, der ein federbedingtes Zurückschieben des Riegelbolzens 14 aus der Rastöffnung 19 verhindert. Durch eine in der Fig. 2 angedeutete Rastnase 20 kann ein unbeabsichtigtes Abgleiten des Anschlagnockens 15 vom Anschlag 11 verhindert werden. Aus der Fig. 1, die diese Verriegelungsstellung des Riegelbolzens 14 zeigt, kann außerdem entnommen werden, daß in der Verriegelungsstellung der Anschlagnocken 15 innerhalb der Ausnehmung 12 verbleibt, so daß selbst in der Verriegelungsstellung ein Verschwenken des Anschlagnockens 15 gegen die Längsnut 13 hin unmöglich ist.

Der Betätigungskopf 16 des Riegelbolzens 14 ist mit einem radial abstehenden Steg 21 verbunden, der in der Verriegelungsstellung des Riegelbolzens 14 mit einem Anschlag 22 des Handrades 5 zusammenwirkt. Über diesen Steg 21, der nicht nur die Verstellung des Betätigungskopfes 16 erleichtert, sondern auch die jeweilige Drehstellung des Verriegelungsbolzens 14 kennzeichnet, kann die Verriegelungsstellung zusätzlich gesichert werden, wenn der Steg 21 mit dem Anschlag 22 in geeigneter Weise verbunden wird. Zu diesem Zweck können sowohl der Steg 21 als auch der Anschlag 22 Durchtrittslöcher 23 aufweisen, die in der Verriegelungsstellung fluchten, um ein Verbindungsglied hindurchführen zu können.

## Patentansprüche

1. Vorrichtung zum Verriegeln eines Rohrleitungsventils (1) mit einem auf eine Betätigungswelle (3) des Rohrleitungsventils (1) aufsetzbaren Betätigungsglied (4), dem ein eine Durchgangsbohrung (9) durchsetzender, in wenigstens eine Rastöffnung (19) im Ventilgehäuse (2) einführbarer Riegelbolzen (14) zugeordnet ist, **dadurch gekennzeichnet, daß** der mit einem radial abstehenden Anschlagnocken (15) versehene Riegelbolzen (14) über einen Betätigungskopf (16) in der Durchgangsbohrung (9) zwischen zwei die Ver- und Entriegelung bedingenden Endstellungen verlagerbar ist, die durch zwei mit dem Anschlagnocken (15) zusammenwirkende, in Achs- und Umfangsrichtung gegeneinander versetzte Anschläge (10, 11) festgelegt sind, daß der Riegelbolzen (14) durch eine Feder (17) im Anschlagsinn des Anschlagnockens (15) axial beaufschlagbar ist, daß die gegeneinander versetzten Anschläge (10, 11) aus einer abgestuften Ausnehmung (12) am verriegelungsseitigen Ende der Durchgangsbohrung (9) bestehen, daß die Durchgangsbohrung (9) außerhalb des Umfangbereiches der abgestuften Ausnehmung (12) für die Anschläge (10, 11) eine axial durchgehende Längsnut (13) zum Einführen des Anschlagnokens (15) des Riegelbolzens (14) aufweist und daß die axiale Eingriffstiefe der Rastöffnung (19) im Ventilgehäuse (2) kleiner als die für ein Ausschieben des Anschlagnockens (15) aus der Durchgangsbohrung (9) vorgesehene Verschiebelänge des Riegelbolzens (14) ist, der die zwischen dem Betätigungskopf (16) und dem Betätigungsglied (4) abgestützte Feder (17) durchsetzt.

2. Vorrichtung nach Anspruch 1, **dadurch gekennzeichnet, daß** der Betätigungskopf (16) des Riegelbolzens (14) einen radial abstehenden, mit einem Anschlag (22) des Betätigungsgliedes (4) zusammenwirkenden Steg (21) aufweist.

## Claims

1. Locking device for a pipeline valve (1) with an actuating member (4) adapted to be placed on an actuating shaft (3) of the pipeline valve (1), to which a locking pin (14) is assigned which is adapted to be inserted into at least one engagement opening (19) in the valve housing (2) and passes through a passage bore (9), **characterised in that** the locking pin (14) provided with a radially projecting stop cam (15) is adapted to be displaced via an actuating head (16) in the passage bore (9) between two end positions determining locking and unlocking which are fixed by two stops (10, 11) offset against each other in axial and peripheral direction and cooperating with the stop cam (15), **in that** the locking pin (14) is adapted to be axially impacted by a spring (17) in the stop direction of the stop cam (15), **in that** the stops (10, 11) offset against each other consist of a stepped recess (12) at the locking-side end of the passage bore (9), **in that** the passage bore (9) outside of the peripheral region of the stepped recess (12) for the stops (10, 11) comprises an axially passing longitudinal groove (13) for insertion of the stop cam (15) of the locking pin (14) and **in that** the axial engagement depth of the engagement opening (19) in the valve housing (2) is smaller than the displacement length of the locking pin (14) provided for withdrawal of the stop cam (15) from the passage bore (9), said locking pin (14) passing through the spring (17) resting between the actuating head (16) and the actuating member (4).

2. Device according to claim 1, **characterised in that** the actuating head (16) of the locking pin (14) comprises a radially projecting web (21) cooperating with a stop (22) of the actuating member (4).

## Revendications

1. Dispositif de verrouillage d'une soupape de conduit (1), avec un organe d'actionnement (4), susceptible d'être monté sur un arbre d'actionnement (3) de la soupape de conduit (1), auquel est associé un boulon de verrouillage (14) traversant un perçage de passage (9), susceptible d'être introduit en au moins une ouverture d'encliquetage (19) ménagée dans le boîtier de soupape (2), **caractérisé en ce que** le boulon de verrouillage (14), muni d'une came de butée (15) en saillie radialement, est déplaçable, par l'intermédiaire d'une tête d'actionnement (16), dans le perçage de passage (9), entre deux positions finales conditionnant le verrouillage et le déverrouillage, positions fixées par deux butées (10, 11), décalées l'une par rapport à l'autre en direction axiale et périphérique et coopérant avec la came de butée (15), **en ce que** le boulon de verrouillage (14) est susceptible d'être sollicité axialement dans le sens de la mise en butée de la came de butée (15), au moyen d'un ressort (17), **en ce que** les butées (10, 11) décalées l'une par rapport à l'autre sont formées d'un évidement (12) étagé, sur l'extrémité, située côté verrouillage, du perçage traversant (9), **en ce que** le perçage traversant (9) présente, hors de la zone périphérique de l'évidement (12) étagé pour les butées (10, 11), une rainure longitudinale (13) continue servant à l'introduction de la came de butée (15) du boulon de verrouillage (14), et **en ce que** la profondeur d'engagement axiale de l'ouverture d'encliquetage (19) dans le boîtier de soupape (2) est inférieure à la longueur de déplacement, prévue pour une sortie de la came de butée (15) hors du perçage traversant (9), du boulon de verrouillage (14), qui traverse le ressort (17) soutenu entre la tête d'actionnement (16) et l'organe d'actionnement (4).

2. Dispositif selon la revendication 1, **caractérisé en ce que** la tête d'actionnement (16) du boulon de verrouillage (14) présente une nervure (21) en saillie radialement, coopérant avec une butée (22) de l'organe d'actionnement (4).
